# FASCICULE DE BREVET EUROPEEN

(11) **EP 4 049 182 B1**
(45) Date de publication et mention de la délivrance du brevet: **08.01.2025**
(21) Numéro de dépôt: 20821135.9
(22) Date de dépôt: 30.11.2020
(51) Int. Cl.: G06K 19/18, G09F 3/03, H04N 1/32

(54) **PROCÉDÉ ET DISPOSITIF DE SÉCURISATION D'UN OBJET ET PROCÉDÉ D'AUTHENTIFICATION D'UN OBJET**
VERFAHREN UND VORRICHTUNG ZUR SICHERUNG EINES OBJEKTS UND VERFAHREN ZUR AUTHENTIFIZIERUNG EINES OBJEKTS
METHOD AND DEVICE FOR SECURING AN OBJECT AND METHOD FOR AUTHENTICATING AN OBJECT

(43) Date de publication de la demande: 31.08.2022
(73) Titulaire: Advanced Track & Trace, 92500 Rueil-Malmaison (FR)
(72) Inventeur: MASSICOT, Jean-Pierre, 92500 Rueil-Malmaison (FR); SAGAN, Zbigniew, 92500 Rueil-Malmaison (FR)
(74) Mandataire: Cornuejols, Marine Sophie
(86) Numéro de dépôt international: PCT/EP2020/083984
(87) Numéro de publication internationale: WO 2021/105514

(56) Documents cités:
- EP-A1- 3 066 612
- EP-A2- 0 947 953
- EP-A2- 1 312 030
- EP-B1- 3 066 612
- CN-A- 108 197 685
- US-A1- 2013 335 784

## Description

### DOMAINE TECHNIQUE DE L'INVENTION

La présente invention vise un procédé et un dispositif de sécurisation d'un objet ainsi qu'un procédé et un dispositif d'authentification d'un objet ainsi qu'un document sécurisé par un procédé objet de la présente invention. Elle s'applique, notamment, au domaine de la cryptographie, vérification de l'intégrité de donnés et à la détection de copies.

### ÉTAT DE LA TECHNIQUE

Actuellement, les autorités de certification délivrent des certificats décrivant des identités numériques et mettent à disposition les moyens de vérifier la validité des certificats qu'elle a fournis pour une période de validité de trois, cinq ou parfois dix ans en fonction des usages. Une fois le certificat expiré, il n'est plus possible d'y accéder. Ces certificats servent entre autres à signer des données caractéristiques concernant des d'objets ou de documents physiques.

Cependant, dans le cadre d'objets et de documents ayant un cycle de vie long, tels que des objets de valeur et des diplômes par exemple, le certificat peut avoir expiré ce qui rend les marques portant des données caractéristiques signées apposées non vérifiables.

Étant donné le grand nombre d'objets ou de documents marqués et signés chaque année, il serait très couteux de stocker tous les certificats même après leur expiration dans des bases de données dont l'espace de stockage serait extrêmement volumineux. En plus, si un seul certificat est utilisé, dans le cadre d'un cas d'usage particulier, pour plusieurs millions voir plusieurs milliards d'objets, il serait compliqué et très couteux de maintenir dans une base des données de l'organisme de certification l'ensemble des références signées.

Par ailleurs, les cachets électroniques visibles (d'acronyme « CEV ») sont définis par des normes, leur taille de modules fonctionnels en octets est standardisée et dans la plupart des cas ne peut être inférieure à 64 octets (16 octets pour l'en-tête, zéro ou au moins un bit pour le message et 48 pour la signature).

Les cachets électroniques visibles sont encodés dans des codes à barres en deux dimensions ou « 2D », préférentiellement, des codes comme le DataMatrix ou le code QR (marque déposée, acronyme de « Quick Response » en anglais). Cependant, en fonction de l'emplacement sur lequel le code à barres 2D doit être positionné, la taille du code doit être minimisée, mais toujours lisible par un lecteur.

Il n'est donc pas toujours possible de placer l'intégralité du cachet électronique visible dans le code à barres 2D dans la limite de la surface disponible.

Le document EP3066612 décrit un procédé de création d'un code-barres 2D, comprenant l'incorporation d'informations primaires qui peuvent être lues par un lecteur de code-barres 2D dans un modèle d'informations primaires et l'incorporation d'informations secondaires qui sont rendues difficiles à reproduire sans altération dans un motif visible intégré dans ledit code à barres (100) dans au moins une zone qui ne contient aucune information primaire.

Le document EP0947953 décrit un schéma de marquage d'images qui comprend des techniques pour insérer et extraire des filigranes dans le domaine fréquentiel et pour déterminer si une image ainsi filigranée a été falsifiée. L'insertion de filigrane est réalisée en incorporant les bits d'une signature numérique d'une fonction de hachage de l'image dans les coefficients de fréquence de l'image.

Le document EP1312030 décrit des systèmes de création et d'authentification d'objets imprimés à l'aide de filigranes d'authentification et de détection de copie. Par exemple, les filigranes d'authentification et de détection de copie peuvent être des filigranes séparés incorporés dans une image qui est imprimée sur l'objet. Le filigrane d'authentification comprend un identifiant qui relie l'objet à une entrée de base de données avec des informations connexes sur l'objet.

Le document CN108197685 décrit un procédé anti-contrefaçon qui comprend les étapes consistant à : générer une image de code QR (réponse rapide) en traitant des premières informations prédéfinies via un procédé de codage de code QR ; chiffrer les premières informations au moyen d'une clé privée prédéfinie après avoir traité les premières informations au moyen d'une opération de hachage pour obtenir des premières informations de signature ; fusionner l'image de code QR et une image d'arrière-plan prédéfinie pour obtenir une image de code visuel ; incorporer les premières informations de signature dans l'image de code visuel selon une technique de filigrane numérique pour obtenir une image de code visuel anti-contrefaçon.

Le document US2013/335784 décrit un procédé de filigranage numérique pour du texte ou des images qui utilise des matériaux de marquage de bord spectral imprimés sur un support d'impression pour incorporer des données cachées. Les marqueurs de bord spectral ont un spectre d'absorption au bord du spectre visible humain, soit au bord UV, soit au bord IR, qui fournit une densité optique qui est généralement imperceptible pour l'homme, mais qui peut être détectée par une capture d'image dispositif. Le dispositif de capture d'image a une réponse spectrale visible qui s'étend dans une région spectrale juste à l'extérieur du spectre visible où se produit l'absorption du marqueur de bord spectral, et peut être actionné pour détecter les données cachées.

### EXPOSE DE L'INVENTION

La présente invention vise à remédier à tout ou partie de ces inconvénients.

À cet effet, selon un premier aspect, la présente invention vise un procédé de sécurisation d'un objet selon la revendication 1.

Grâce à ces dispositions, la marque anticopie fragile permet de vérifier que la signature, au moment de l'apposition de la marque et du code à barres en deux dimensions, était bien authentique et correspondait à un certificat même si ce certificat n'est plus accessible. Il est donc possible pas seulement de vérifier l'intégrité des données même après expiration du certificat ayant donné lieu à la signature mais également de vérifier la légitimité physique de l'objet qui porte ces données. La marque anticopie fragile agit en tiers de confiance.

Dans des modes de réalisation, le deuxième message encodé dans la marque anticopie fragile comporte au moins une information représentative de l'objet sur lequel la marque est à apposer. Ces modes de réalisation permettent notamment de lier la marque anticopie fragile à l'objet sur lequel elle est apposée. Ainsi, l'utilisateur peut vérifier que la marque lue correspond bien à l'objet unique sur lequel elle a été apposée à l'origine, en plus de vérifier l'intégrité de données qu'elle porte.

Dans des modes de réalisation, le procédé objet de l'invention comporte, de plus, une étape de détermination d'au moins une propriété physique de l'objet sur lequel la marque anticopie fragile est à apposer, le deuxième message encodé dans la marque anticopie fragile comportant une information représentative de ladite propriété physique déterminée. L'avantage de ces modes de réalisation est d'identifier un objet par rapport à ses caractéristiques physiques. Plus particulièrement, lorsque l'objet est produit en série, il est possible d'identifier des caractéristiques physiques différenciantes, par exemple à un niveau microscopique, dans la structure même de l'objet.

Dans des modes de réalisation, une information représentative de l'objet sur lequel la marque est à apposer est une métrique d'artefact ou une fonction physique inclonable (« physical unclonable function » en anglais, d'acronyme « PUF »). Ces modes de réalisation permettent d'identifier chaque objet par des informations qui lui sont propres, similairement aux informations biométriques pour les êtres vivants.

Dans des modes de réalisation, le deuxième message représentatif de la signature réalisée est obtenu au moins par application d'une fonction de hachage de la signature réalisée. Ces modes de réalisation permettent de limiter la quantité de données à stocker dans la marque anticopie fragile tout en vérifiant de manière sécurisée le condensat (« hash » en anglais) ainsi que sa signature.

Dans des modes de réalisation, le deuxième message représentatif de la signature réalisée est obtenu par calcul d'un code de redondance cyclique (d'acronyme « CRC ») appliqué au condensat issu de la fonction de hachage de la signature réalisée. Ces modes de réalisation permettent de limiter la quantité de données à stocker dans la marque anticopie fragile tout en vérifiant de manière implicite sécurisée le condensat ainsi que sa signature.

Dans des modes de réalisation, le code à barres en deux dimensions est représentatif d'un cachet électronique visible. Grâce à ces dispositions, la taille et le contenu de l'en-tête et de la signature sont normalisés.

Selon un deuxième aspect et/ou dans des modes de réalisation détaillés ci-dessus, la présente invention vise un procédé de sécurisation d'un objet, qui comporte :
- une étape de formation d'un contenu d'un cachet électronique visible représentatif d'au moins un en-tête, un message et une signature,
- une étape de détermination d'une forme d'un code à barres en deux dimensions présentant une capacité de stockage d'informations répartie en au moins deux zones,
- une étape de segmentation en au moins deux parties du contenu du cachet électronique visible en fonction de la capacité de stockage de chaque zone, chaque partie étant attribuée à une zone,
- une étape d'enregistrement d'une information représentative de la segmentation et de l'attribution pour recomposer, à la lecture, le contenu du cachet électronique visible,
- une étape d'encodage du cachet électronique visible segmenté dans la forme du code à barres en deux dimensions déterminées et
- une étape de marquage de l'objet avec le code à barres en deux dimensions encodé.

Grâce à ces dispositions, le cachet électronique visible est réparti sur l'ensemble du code à barres en deux dimensions sans pour autant que les éléments constitutifs du code soient placés dans l'ordre. La structure du CEV est ensuite reconstituée à la lecture du code. Des codes à barres 2D contraints à avoir de petites dimensions sont donc lisibles tout en contenant l'intégralité des données du CEV.

Dans des modes de réalisation, le code à barres en deux dimensions est un code comportant au moins un élément d'orientation de lecture du code et un espace de charge utile, au moins un élément d'orientation de lecture du code étant une zone de stockage et l'espace de charge utile étant une autre zone de stockage.

Ces modes de réalisation permettent de faire porter des informations par des éléments du code à barres 2D n'en portant habituellement pas.

Dans des modes de réalisation, l'en-tête du cachet électronique visible comporte l'information représentative de la segmentation et de l'attribution.

L'avantage de ces modes de réalisation est que l'en-tête du cachet peut donner accès à une ressource locale ou distante comportant les informations nécessaires à la recomposition du message pour limiter la taille du CEV.

Dans des modes de réalisation, le procédé objet de l'invention comporte :
- une étape de création d'une marque anticopie fragile représentative de la segmentation et de l'attribution pour recomposer le cachet électronique et
- une étape de marquage de la marque anticopie fragile sur l'objet.

Ces modes de réalisation permettent de stocker dans une marque indépendante les règles de recomposition du CEV. Il est donc possible d'effectuer une première vérification de l'intégrité des objets et des données. Notamment, si le code recomposé ne correspond pas à la bonne structure de code, l'authenticité de l'objet est compromise.

Dans des modes de réalisation, le procédé objet de l'invention comporte, de plus :
- une étape de détermination d'une taille de cellule du code à barres en deux dimensions, la taille de cellule étant définie par une surface contenant une quantité de points,
- une étape d'estimation d'une quantité minimum de points d'une couleur prédéterminée dans une cellule pour que la cellule soit détectée comme étant de ladite couleur par un lecteur prédéterminé et
- pour au moins une cellule, une étape de définition d'une image à représenter dans ladite cellule, la quantité de points de l'image de la couleur définissant la cellule étant supérieure à la quantité minimum estimée, un ensemble d'images représentant l'en-tête, le message et/ou la signature.

Grâce à ces dispositions, la signature du CEV peut ne pas être contenue ou au moins entièrement contenue dans le code à barres 2D mais représentée dans les cellules ce qui permet un gain de place nécessaire dans le code à barres 2D.

Dans des modes de réalisation, au moins une partie du code à barres en deux dimensions présente un code à barres bidimensionnel à haute densité.

Ces modes de réalisation permettent d'augmenter la capacité de stockage du code à barres 2D sans en modifier les dimensions.

Dans des modes de réalisation, au moins un élément d'orientation de lecture du code présente un code-barres bidimensionnel à haute densité.

Grâce à ces dispositions, la capacité de stockage du code QR ou DataMatrix est augmentée sans affecter la capacité de ce code à être lue par un lecteur.

Selon un troisième aspect, la présente invention vise un dispositif de sécurisation d'un objet, qui comporte :
- un moyen d'encodage d'un premier message dans un code à barres en deux dimensions, le premier message comportant au moins un en-tête identifiant une ressource de certification et une signature réalisée au moyen de ladite ressource,
- un moyen de génération d'une marque anticopie fragile encodant un deuxième message représentatif de la signature réalisée, le deuxième message comportant des redondances et
- un moyen de marquage de l'objet avec le premier code à barres en deux dimensions et la marque anticopie fragile.

Les buts, avantages et caractéristiques particulières du dispositif de sécurisation objet de l'invention étant similaires à ceux du procédé de sécurisation objet de l'invention, ils ne sont pas rappelés ici.

Selon un quatrième aspect, la présente invention vise un procédé d'authentification d'un objet, qui comporte :
- une étape de lecture d'un code à barres en deux dimensions pour obtenir un premier message comportant un en-tête identifiant une ressource de certification et une signature réalisée au moyen de ladite ressource,
- une étape de calcul d'un élément représentatif du condensat de la signature réalisée et/ou de la signature réalisée,
- une étape de lecture d'une marque anticopie fragile pour obtenir un deuxième message représentatif de la signature réalisée, le deuxième message comportant des redondances,
- une première étape de comparaison de l'élément représentatif lue avec l'élément représentatif calculé et
- une étape d'indication de l'authenticité de l'objet en fonction du résultat d'au moins une comparaison.

Grâce à ces dispositions, l'utilisateur peut avoir rapidement une information concernant l'authenticité ou non de l'objet marqué même si le certificat est expiré.

Dans des modes de réalisation, au cours de l'étape de lecture d'une marque anticopie fragile, une information représentative de l'objet sur lequel la marque a été apposée est obtenue, le procédé comportant de plus, une deuxième étape de comparaison de l'information obtenue et de l'objet. Ces modes de réalisation permettent de vérifier que la marque anticopie fragile, et le code à barres en deux dimensions n'ont pas été déplacés d'un objet à un autre et qu'il s'agit bien de l'objet original dont l'authenticité est vérifiée.

Selon un cinquième aspect, la présente invention vise un dispositif d'authentification d'un objet, qui comporte :
- un moyen de formation d'un contenu d'un cachet électronique visible représentatif d'au moins un en-tête, un message et une signature,
- un moyen de détermination d'une forme d'un code à barres en deux dimensions présentant une capacité de stockage d'informations répartie en au moins deux zones,
- un moyen de segmentation en au moins deux parties du contenu du cachet électronique visible en fonction de la capacité de stockage de chaque zone, chaque partie étant attribuée à une zone,
- un moyen d'enregistrement d'une information représentative de la segmentation et de l'attribution pour recomposer, à la lecture, le contenu du cachet électronique visible,
- un moyen d'encodage du cachet électronique visible segmenté dans la forme du code à barres en deux dimensions déterminée et
- un moyen de marquage de l'objet avec le code à barres en deux dimensions encodé.

Les buts, avantages et caractéristiques particulières du dispositif de sécurisation objet de l'invention étant similaires à ceux du procédé de sécurisation objet de l'invention, ils ne sont pas rappelés ici.

Selon un sixième aspect, la présente invention vise un procédé d'authentification d'un objet, qui comporte :
- une étape de lecture d'un code à barres en deux dimensions obtenu selon le procédé de sécurisation objet de l'invention,
- une étape d'accès à une information représentative d'une segmentation du premier message et d'une attribution de segments du premier message à des zones du code à barres en deux dimensions, pour recomposer un contenu d'un cachet électronique visible,
- une étape de recomposition du contenu du cachet électronique visible en fonction de l'information de la segmentation et de l'attribution accédée et
- une étape de vérification de l'authenticité du contenu cachet électronique visible recomposé.

Grâce à ces dispositions, l'authenticité du CEV peut être vérifiée, si la recomposition correspond à la structure d'un CEV, même si le code est réparti sur plusieurs éléments du code à barres 2D.

Selon un septième aspect, la présente invention vise un dispositif d'authentification d'un objet, qui comporte :
- un moyen de lecture d'un code à barres en deux dimensions obtenu selon le procédé de sécurisation objet de l'invention,
- un moyen d'accès à une information représentative d'une segmentation du premier message et d'une attribution de segments du premier message à des zones du code à barres en deux dimensions, pour recomposer un contenu d'un cachet électronique visible,
- un moyen de recomposition du contenu du cachet électronique visible en fonction de la segmentation et de l'attribution et
- un moyen de vérification de l'authenticité du cachet électronique visible recomposé.

Les buts, avantages et caractéristiques particulières du procédé d'authentification objet de l'invention étant similaires à ceux du dispositif d'authentification objet de l'invention, ils ne sont pas rappelés ici.

Les différents aspects de l'invention et leurs caractéristiques particulières sont destinés à être combinés entre eux pour qu'un marquage d'un objet permette l'authentification de cet objet.

### BRÈVE DESCRIPTION DES FIGURES

D'autres avantages, buts et caractéristiques particulières de l'invention ressortiront de la description non limitative qui suit d'au moins un mode de réalisation particulier du procédé et du dispositif de sécurisation et du procédé et du dispositif d'authentification objets de l'invention, en regard des dessins annexés, dans lesquels :
- la figure 1 représente, schématiquement et sous forme de logigramme, une succession d'étapes particulière du procédé de sécurisation objet de l'invention,
- la figure 2 représente, schématiquement, un premier mode de réalisation particulier d'un dispositif de sécurisation objet de l'invention,
- la figure 3 représente, schématiquement, un premier mode de réalisation d'un objet sécurisé par un procédé objet de l'invention et
- la figure 4 représente, schématiquement et sous forme d'un logigramme, une succession d'étapes particulière du procédé d'authentification objet de l'invention et
- la figure 5 représente, schématiquement, un premier mode de réalisation particulier d'un dispositif d'authentification objet de l'invention,
- la figure 6 représente, schématiquement et sous forme de logigramme, une succession d'étapes particulière du procédé de sécurisation objet de l'invention,
- la figure 7 représente, schématiquement, un premier mode de réalisation particulier d'un dispositif de sécurisation objet de l'invention,
- la figure 8 représente, schématiquement, un premier mode de réalisation d'un objet sécurisé par un procédé objet de l'invention,
- la figure 9 représente, schématiquement, un deuxième mode de réalisation d'un objet sécurisé par un procédé objet de l'invention,
- la figure 10 représente, schématiquement et sous forme d'un logigramme, une succession d'étapes particulière du procédé d'authentification objet de l'invention,
- la figure 11 représente, schématiquement, un premier mode de réalisation particulier d'un dispositif d'authentification objet de l'invention et
- la figure 12 représente, schématiquement, un troisième mode de réalisation d'un objet sécurisé par un procédé objet de l'invention.

### DESCRIPTION DES MODES DE RÉALISATION

La présente description est donnée à titre non limitatif, chaque caractéristique d'un mode de réalisation pouvant être combinée à toute autre caractéristique de tout autre mode de réalisation de manière avantageuse. On note dès à présent que les figures ne sont pas à l'échelle. On appelle :
- Objet : toute chose concrète, perceptible par la vue, le toucher, par exemple une puce électronique ou un document sur lequel une information est marquée.
- Point : le plus petit élément d'un objet physique marqué, à partir d'un ou plusieurs pixels.
- Cellule : un ensemble de points étant définie par une surface contenant une quantité de points, la forme d'une cellule peut être toute forme connue, par exemple un carré, un rectangle ou encore un rond.
- Code à barres en deux dimensions : un code graphique en deux dimensions comportant des cellules, par exemple carrées, chaque cellule étant d'au moins une couleur parmi deux couleurs distinctes, des exemples de codes à barres en deux dimensions sont les codes QR (marque déposée, acronyme de « Quick Response » en anglais) ou encore les DataMatrix, les Semacodes (marque déposée).
- Marquage : l'apposition d'un élément graphique à partir d'une source d'information numérique sur un objet, par exemple par gravure ou par impression.
- Marque anticopie fragile : marque dont la dégradation par le bruit lors du marquage, c'est-à-dire la génération d'erreurs ponctuelles, individuellement imprévisible, faisant qu'un point est interprété avec une valeur incorrecte, puis de copie, peut être mesurée pour discriminer un original d'une copie.
- Cachet électronique visible (d'acronyme « CEV ») : ensemble de données structurées sous forme de code lisible par machine contenant, un en-tête, un message et leur signature par l'émetteur. L'en-tête détermine le type de message et l'émetteur. L'en-tête référence un certificat de signature. Un bloc de données auxiliaires facultatif peut être ajouté après la signature.
- Signature : un certificat indique l'algorithme de signature numérique utilisé et incidemment la taille de la signature, qui est habituellement fondée sur la durée de vie prévue de la signature. La signature est utilisée pour vérifier l'intégrité des données signées et pour identifier/authentifier l'émetteur de l'objet. Dans le cadre d'un CEV, le certificat est référencé dans l'en-tête et la signature calculée à l'aide de la clé privée permet de vérifier l'intégrité de l'en-tête et du message.

Dans la suite de la description, les cellules et les codes à barres en deux dimensions sont de forme carrée à titre d'illustration. L'homme du métier saurait utiliser des cellules et des codes à barres en deux dimensions de forme différente.

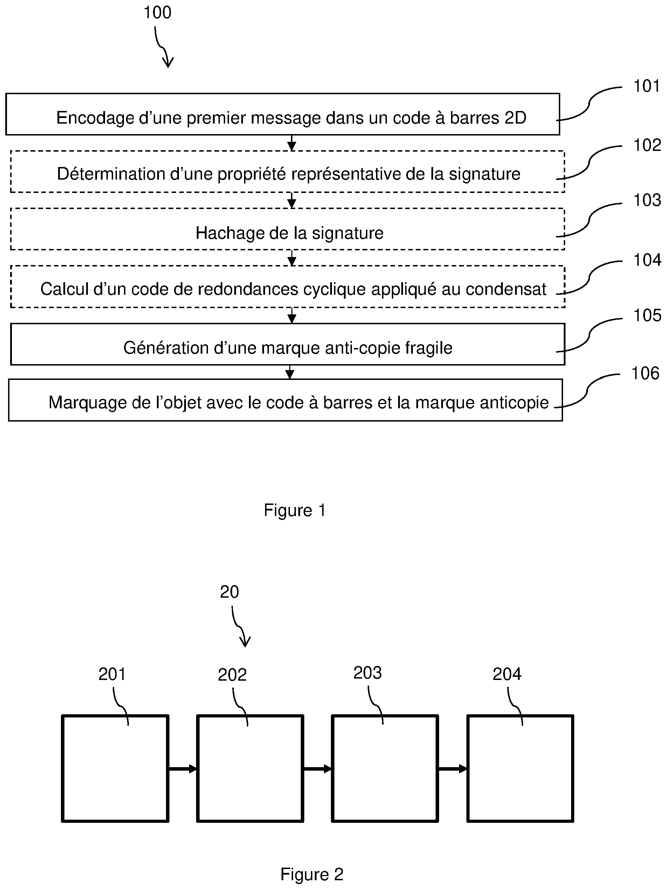

On observe, sur la figure 1, qui n'est pas à l'échelle, une vue schématique d'un mode de réalisation du procédé 100 objet d'un aspect de l'invention.

Le procédé 100 de sécurisation d'un objet comporte :
- une étape d'encodage 101 d'un premier message dans un code à barres en deux dimensions, le premier message comportant au moins un en-tête identifiant une ressource de certification et une signature réalisée au moyen de ladite ressource,
- une étape de génération 105 d'une marque anticopie fragile encodant un deuxième message représentatif de la signature réalisée, le deuxième message comportant des redondances et
- une étape de marquage 106 de l'objet avec le premier code à barres en deux dimensions et la marque anticopie fragile.

L'étape d'encodage 101 peut être réalisée par des moyens connus de l'homme du métier par exemple au moyen d'une clé symétrique ou d'une clé asymétrique, de brouillage et de permutations, de manière connue de l'homme du métier. Le premier message encodé est préférentiellement un cachet électronique visible. Le code à barres en deux dimensions peut être tout code à barres connu de l'homme du métier, par exemple, un code QR (marque déposée, acronyme de « Quick Response ») ou un code DataMatrix.

Dans des modes de réalisation, lors de l'étape d'encodage, des caractères alphanumériques sont représentés dans des cellules du code à barres en deux dimensions sans modifier la couleur détectée par un lecteur du code à barres en deux dimensions. C'est-à-dire qu'une quantité minimum de points d'une couleur prédéterminée dans une cellule pour que la cellule soit détectée comme étant de ladite couleur par un lecteur prédéterminé est respectée lors de la représentation du caractère alphanumérique.

En cryptographie, le condensat est synonyme de « hash » ou « empreinte », résultat de l'application d'une fonction de hachage sur un message.

Lors de l'étape de génération 105, le code généré comporte des redondances configurées pour que le deuxième message soit lisible et/ou qu'il soit possible de le reconstituer, malgré les dégradations de la marque anticopie fragile dues à l'impression. Ainsi, la marque anticopie est bien fragile mais le deuxième message peut être considéré comme robuste, c'est-à-dire qu'il est possible d'accéder à son contenu. Les redondances sont bien connues de l'homme du métier, soit pour détecter des erreurs dans un signal ou un message, par exemple avec un bit de parité ou des codes de détection d'erreur, soit pour corriger des erreurs avec des codes de correction d'erreur. Ces redondances peuvent être, notamment, au moins une reproduction supplémentaire du signal ou du message ou un contrôle ou code de redondance cyclique ou CRC (cyclic redundancy check).

Le CRC est un outil logiciel permettant de détecter les erreurs de transmission ou de transfert par ajout, combinaison et comparaison de données redondantes, par exemple obtenues grâce à une procédure de hachage. Ainsi, une erreur peut être signalée à l'utilisateur lors de la copie d'un support (disque dur, CD-Rom, DVD-Rom, clé USB, etc.) vers un autre support de sauvegarde. Les CRC sont évalués (échantillonnés) avant et après la transmission ou le transfert, puis comparés pour s'assurer que les données sont identiques. Les calculs de CRC les plus utilisés sont conçus afin de pouvoir toujours détecter, voire corriger, les erreurs de certains types, comme celles dues par exemple, aux interférences lors de la transmission. En ce qui concerne l'implémentation, l'opération mathématique essentielle dans le calcul de certains CRC est une division modulo 2 dont le reste représente le CRC. Il s'agit, en ce qui concerne la marque anticopie, de corriger les erreurs liées à la production analogique ou la reproduction de la marque anticopie fragile, ce qui permet, à la fois, de mesurer son taux d'erreurs et donc de détecter une copie et d'accéder au deuxième message contenu dans ce code fragile.

Dans des modes de réalisation, le deuxième message encodé dans la marque anticopie fragile comporte au moins une information représentative de l'objet sur lequel la marque est à apposer, par exemple une information représentative d'une caractéristique physique de l'objet. L'information représentative de l'objet peut être toute information relative à la fabrication et/ou à la distribution du produit. Par exemple, une identification du fabricant ou un numéro de série, ou encore une identification des distributeurs autorisés.

Préférentiellement, le procédé 100 comporte de plus, une étape de détermination 102 d'au moins une propriété physique de l'objet sur lequel la marque anticopie fragile est à apposer, le deuxième message encodé dans la marque anticopie fragile comportant une information représentative de ladite propriété physique déterminée.

Lors de l'étape de détermination 102, au moins une photographie de l'objet est capturée, puis, des éléments caractéristiques sont extraits de ladite photographie, par exemple des arrêtes, des modifications de contraste, des couleurs, des caractères reconnus par reconnaissance optique de caractère. Les éléments caractéristiques sont ensuite directement encodés dans la marque anticopie. La photographique, ou un moyen d'y accéder, peut également être encodé dans la marque anticopie fragile.

Dans des modes de réalisation, une information représentative de l'objet sur lequel la marque est à apposer est une métrique d'artefact ou une fonction physique inclonable (« physical unclonable function » en anglais, d'acronyme « PUF »).

Une métrique d'artefact est une empreinte unique correspondant à l'objet. Les métriques d'artefacts sont calculées à partir de marques de formations individuelles à chaque objet lors de la fabrication de l'objet. Il s'agit, en quelque sorte, d'empreintes digitales de l'objet. Les métriques d'artefacts peuvent être calculées à partir d'une image de l'objet.

Une fonction physique inclonable est comparable à une empreinte digitale pour définir physiquement un dispositif à semi-conducteurs tel un microprocesseur. La fonction physique inclonable est basée sur des variations physiques uniques qui se produisent naturellement lors de la fabrication de semi-conducteurs. Une fonction physique inclonable est une entité physique incorporée dans une structure physique. Aujourd'hui, les fonctions physiques inclonables sont généralement mises en oeuvre dans des circuits intégrés. Préférentiellement, le deuxième message comporte une localisation d'au moins une portion de l'objet à partir de laquelle la métrique d'artefact a été calculée.

Dans des modes de réalisation, le deuxième message représentatif de la signature réalisée est obtenu au moins par application d'une fonction de hachage 103 de la signature réalisée. Ainsi, il n'est pas nécessaire de décoder la signature pour vérifier la correspondance entre la signature du premier message et l'élément caractéristique encodé dans le deuxième message.

Dans des modes de réalisation, le deuxième message représentatif de la signature réalisée est obtenu par calcul 104 d'un code de redondance cyclique (d'acronyme « CRC ») appliqué au condensat issu de la fonction de hachage 103 de la signature réalisée. Le calcul du code de redondance cyclique permet de détecter les erreurs par ajout, combinaison et comparaison de données redondantes, obtenues grâce à une procédure de hachage.

Les CRC sont évalués ou échantillonnés sur le hachage de la signature du premier message et sur le hachage encodé dans le deuxième message, puis comparés pour s'assurer que les données sont probablement identiques. La comparaison est donc effectuée de manière implicite.

Le code à barres en deux dimensions ainsi que la marque anticopie fragile sont ensuite marqués 106 sur l'objet. L'étape de marquage 106 est réalisée par tout moyen connu de l'homme du métier, par exemple, une imprimante ou un laser pour gravure de l'objet.

La figure 2 représente, un premier mode de réalisation particulier d'un dispositif de sécurisation 20 objet d'un aspect de l'invention.

Le dispositif de sécurisation d'un objet comporte :
- un moyen d'encodage 201 d'un premier message dans un code à barres en deux dimensions, le premier message comportant au moins un en-tête identifiant une ressource de certification et une signature réalisée au moyen de ladite ressource,
- un moyen de génération 203 d'une marque anticopie fragile encodant un deuxième message représentatif de la signature réalisée, le deuxième message comportant des redondances et
- un moyen de marquage 204 de l'objet avec le premier code à barres en deux dimensions et la marque anticopie fragile.

Dans des modes de réalisation préférentiels, le dispositif 20 comporte un moyen détermination d'au moins une propriété physique de l'objet sur lequel la marque anticopie fragile est à apposer, le deuxième message encodé dans la marque anticopie fragile comportant une information représentative de ladite propriété physique déterminée.

Préférentiellement, les modes de réalisation du dispositif 20 sont configurés pour mettre en oeuvre les étapes du procédé 100 et leurs modes de réalisation tels qu'exposés ci-dessus et le procédé 100 ainsi que ses différents modes de réalisation peuvent être mis en oeuvre par les modes de réalisation du dispositif 20.

Les moyens d'encodage 201, de détermination 202 et de génération 203 sont préférentiellement un microcontrôleur mettant en oeuvre un programme informatique.

Le moyen de marquage 204 peut être tout moyen connu de l'homme du métier, tels une imprimante ou un laser pour gravure de l'objet.

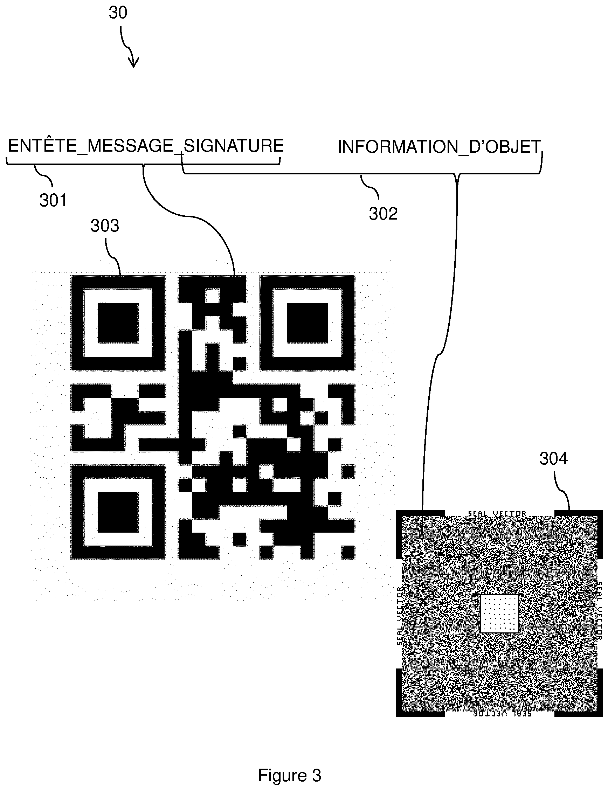

On observe, sur la figure 3, un mode de réalisation particulier d'une marque anticopie fragile et d'un code à barres en deux dimensions obtenu par un procédé objet d'un aspect de l'invention.

Un premier message 301 comportant un en-tête, un message et une signature est représenté. Le premier message 301 est encodé dans un code à barres en deux dimensions 303. Sur la figure 3, le code à barres en deux dimensions 303 est un code QR comportant trois plots d'orientation de lecture du code et une charge utile dans laquelle est encodé le premier message. Le premier message est encodé sous la forme de cellules noires ou blanches.

On observe également sur la figure 3, un deuxième message 302 comportant un élément représentatif de la signature du premier message 301 et une information représentative de l'objet, par exemple d'une caractéristique physique de l'objet.

Le deuxième message est encodé dans un SealVector 304 (marque déposée). Un SealVector est une marque anticopie fragile, sous forme de code à barres en deux dimensions dans laquelle un deuxième message peut être encodé de manière sécurisée. Dans la représentation sur la figure 3, la marque anticopie fragile 304 présente des cellules noires et blanches encodant le deuxième message 302.

La marque anticopie fragile 304 et le code à barres en deux dimensions 303 sont donc liés par leur contenu, la marque anticopie fragile 304 permettant de vérifier l'authenticité du code à barres en deux dimensions 303. Et, la marque anticopie fragile 304 et l'objet (non représenté) sont également liés, la marque anticopie fragile 304 permettant de vérifier que le code à barres en deux dimensions 303 a bien été appliqué au bon objet. Enfin, par nature, le caractère original ou non de la marque anticopie fragile peut être vérifié. L'objet présente donc un triple degré de protection.

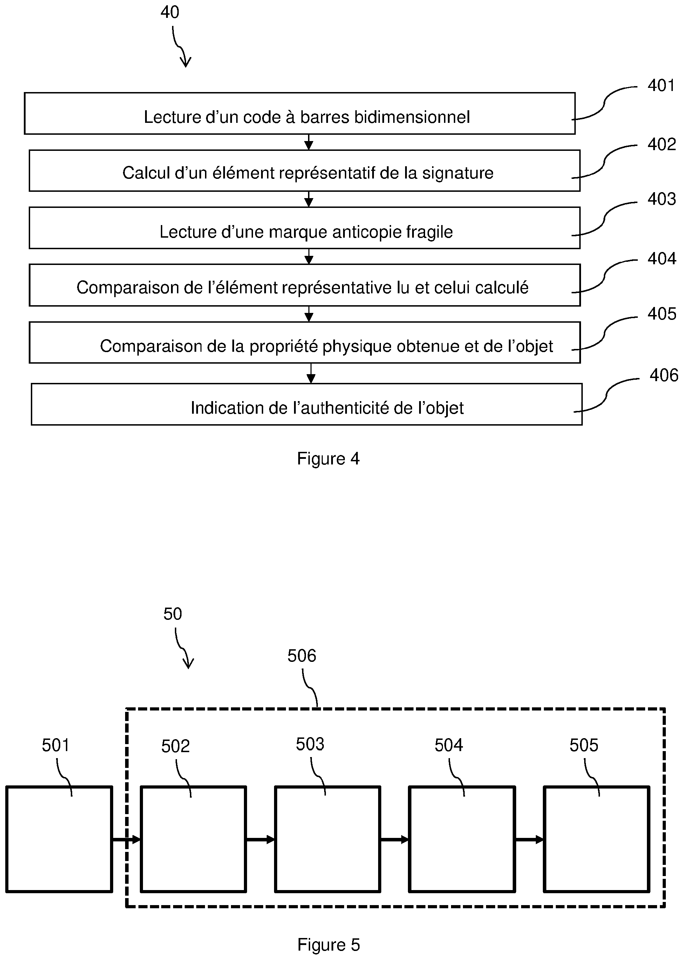

On observe, sur la figure 4, une suite d'étape particulière représentant le procédé 40 d'authentification d'un objet, objet d'un aspect de l'invention.

Le procédé 40 d'authentification d'un objet comporte :
- une étape de lecture 401 d'un code à barres en deux dimensions pour obtenir un en-tête identifiant une ressource de certification et une signature réalisée au moyen de ladite ressource,
- une étape de calcul 402 d'un élément représentatif du condensat de la signature réalisée et/ou de la signature réalisée,
- une étape de lecture 403 d'une marque anticopie fragile pour obtenir un deuxième message représentatif de la signature réalisée, le deuxième message comportant des redondances,
- une première étape de comparaison 404 de l'élément représentatif lue avec l'élément représentatif calculé et
- une étape d'indication 406 de l'authenticité de l'objet en fonction du résultat d'au moins une comparaison.

Lors de l'étape de lecture 401, le code à barres en deux dimensions est décodé par un lecteur 501. Le lecteur 501 est, par exemple, un terminal portable communicant 506 muni d'un appareil photo ou d'une caméra qui scanne le code. Le terminal portable communiquant applique ensuite un algorithme de décodage du code.

La ressource de certification est, par exemple, un accès à un serveur distant ou à un site internet référençant un certificat électronique, et préférentiellement, un manifeste expliquant le processus de l'extraction et vérification des références.

Lors de l'étape de calcul 402, un hachage de la signature, et préférentiellement, un CRC du hache (ou condensat) et de sa signature sont calculés, la signature ayant été lue lors de l'étape de lecture 401.

Dans des modes de réalisation, des caractères alphanumériques sont représentés dans des cellules du code à barres en deux dimensions sans modifier la couleur détectée par un lecteur du code à barres en deux dimensions. C'est-à-dire qu'une quantité minimum de points d'une couleur prédéterminée dans une cellule pour que la cellule soit détectée comme étant de ladite couleur par un lecteur prédéterminé est respectée lors de la représentation du caractère alphanumérique.

Préférentiellement, les caractères alphanumériques représentent la signature et peuvent être lus par reconnaissance optique de caractères.

L'étape de lecture 403 de la marque anticopie fragile peut être réalisée par le même lecteur que le lecteur effectuant la lecture du code à barres en deux dimensions. Lors de l'étape de lecture 403, le caractère original ou copié de la marque anticopie fragile est évalué. L'évaluation du caractère original ou copié dépend d'un taux d'erreur détecté lors de la lecture de la marque anticopie fragile. Le taux d'erreur est comparé à une valeur limite prédéterminée qui permet de déterminer si la marque anticopie fragile est un original ou non.

En effet, la marque anticopie fragile imprimée présente, dès sa première impression sur le document, une quantité importante d'erreurs aléatoires qui imposent qu'une copie, faite avec les mêmes moyens d'impression que le document original, de l'image d'identification imprimée comporte encore plus d'erreurs, le nombre d'erreurs total de la copie permettant de détecter qu'il s'agit d'une copie. Les redondances présentes dans l'image d'identification permettent de corriger les défauts d'impression et/ou de lecture et les marques d'usure ou d'effacement de la marque anticopie fragile.

Le caractère copié de la marque anticopie fragile est un premier niveau d'indication de l'authenticité de l'objet. Lors de l'étape d'indication de l'authenticité de l'objet 406, le caractère copié de la marque anticopie fragile est préférentiellement signalé à un utilisateur.

Lors de l'étape de comparaison 404, l'élément représentatif lu avec l'élément représentatif calculé, les éléments sont préférentiellement comparés caractère par caractère. Dans d'autres modes de réalisation, un calcul de similitude entre les éléments lus et calculés est effectué. Si la similitude calculée est supérieure à une valeur limite prédéterminée, les éléments sont considérés comme suffisamment proches, et l'objet est considéré comme authentique.

Préférentiellement, au cours de l'étape de lecture 403 d'une marque anticopie fragile, une information représentative de l'objet sur lequel la marque a été apposée est obtenue, le procédé comportant de plus, une deuxième étape de comparaison 405 de l'information représentative obtenue et de l'objet.

L'information représentative peut être un numéro de série par exemple. Le numéro de série de l'objet peut être obtenu par reconnaissance optique de caractères. Dans ces cas, l'étape de comparaison peut être effectuée par comparaison caractère par caractère.

Dans des modes de réalisation, l'information représentative peut être une propriété physique ou une métrique d'artefact. Dans ces modes de réalisation, une prise d'image de l'objet, lors de l'authentification, peut être effectuée et un calcul de similitude avec une image ou une métrique encodée au moyen de la marque anticopie fragile est ensuite réalisé. Lorsque la similitude est supérieure à une valeur limite prédéterminée, la marque anticopie fragile est considérée comme ayant été apposée sur ledit objet. Cette constatation est indiquée à l'utilisateur lors de l'étape 406.

Lors de l'étape d'indication 406, l'indication peut être visuelle, sur un écran du terminal 506 ou sonore, sur un transducteur électroacoustique du terminal 506.

On observe, sur la figure 5, un mode de réalisation particulier d'un dispositif 50 d'authentification d'un objet, objet d'un aspect de l'invention qui comporte :
- un moyen de lecture 501 d'un code à barres en deux dimensions pour obtenir un en-tête identifiant une ressource de certification et une signature réalisée au moyen de ladite ressource,
- un moyen de calcul 502 d'un élément représentatif du condensat de la signature réalisée et/ou de la signature réalisée,
- un moyen de lecture 501 d'une marque anticopie fragile pour obtenir un deuxième message représentatif de la signature réalisée, le deuxième message comportant des redondances,
- un moyen de comparaison 504 de l'élément représentatif lue avec l'élément représentatif calculé et
- un moyen d'indication 505 de l'authenticité de l'objet en fonction du résultat d'au moins une comparaison.

Dans des modes de réalisation, le moyen de lecture 501 d'une marque anticopie fragile obtient une propriété physique de l'objet sur lequel la marque a été apposée, le dispositif 50 comportant de plus, un deuxième moyen de comparaison 503 de la propriété physique obtenue et de l'objet.

Préférentiellement, les moyens du dispositif 50 sont configurés pour mettre en oeuvre les étapes du procédé 40 et leurs modes de réalisation tels qu'exposés ci-dessus et le procédé 40 ainsi que ses différents modes de réalisation peuvent être mis en oeuvre par les moyens du dispositif 50.

Les moyens de calcul 502, de comparaison 503 et de comparaison 504 sont préférentiellement un microcontrôleur mettant en oeuvre un programme informatique.

Le moyen de lecture 501 peut être tout moyen connu de l'homme du métier, tel terminal portable communicant 506 muni d'un appareil photo ou d'une caméra qui scanne le code. Le terminal portable communiquant applique ensuite un algorithme de décodage du code.

Le moyen d'indication 505 peut être tout moyen connu de l'homme du métier, par exemple un écran d'affichage d'un terminal 506.

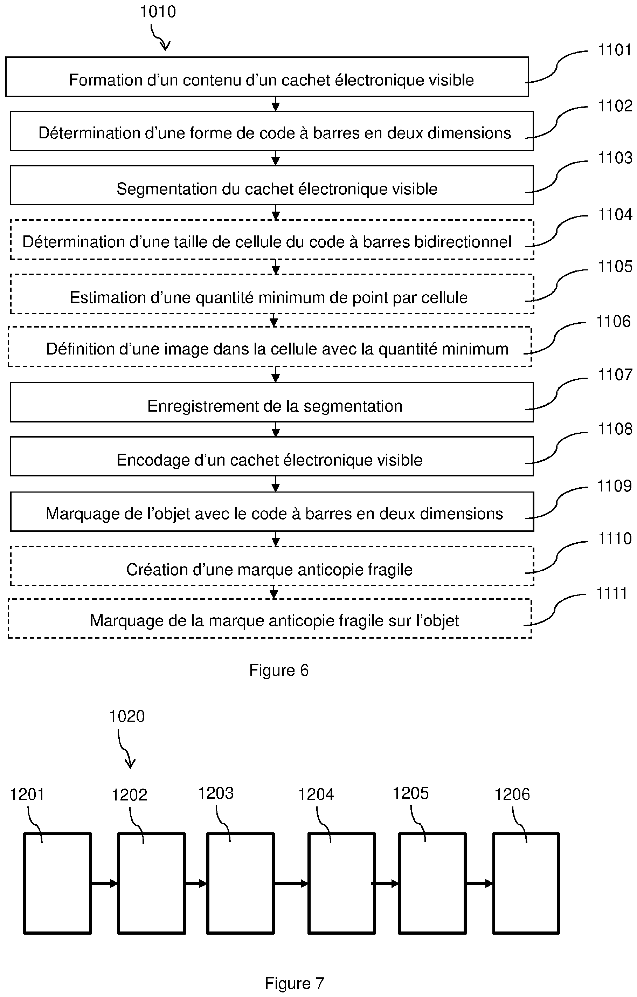

On observe, en figure 6, une suite d'étapes particulières d'un mode de réalisation du procédé 1010 de sécurisation d'un objet, objet d'un aspect de l'invention. Les étapes en pointillés sont optionnelles.

Le premier message est un contenu d'un cachet électronique visible représentatif d'au moins un en-tête, un message et une signature, le procédé 1010 comporte :
- une étape de détermination 1102 d'une forme du premier code à barres 2D présentant une capacité de stockage d'informations répartie en au moins deux zones,
- une étape de segmentation 1103 en au moins deux parties du contenu du cachet électronique visible en fonction de la capacité de stockage de chaque zone, chaque partie étant attribuée à une zone,
- une étape d'enregistrement 1107 d'une information représentative de la segmentation et de l'attribution pour recomposer, à la lecture, le contenu du cachet électronique visible,
- une étape d'encodage 1108 du cachet électronique visible segmenté dans la forme du code à barres 2D déterminée et
- une étape de marquage 1109 de l'objet avec le code à barres 2D encodé.

Lors de l'étape de formation 101 d'un cachet électronique visible, le contenu du cachet électronique visible est composé selon le standard CEV employé.

Le contenu du cachet électronique visible est adapté à être encodé dans un code à barres 2D, également appelé « cachet électronique visible ».

Lors de l'étape de détermination 1102, la forme déterminée présente :
- des dimensions en nombre de cellules et/ou en nombre de points et/ou en dimensions du système métrique,
- une capacité de stockage d'informations répartie en au moins deux zones,
- optionnellement, des éléments graphiques définis par une norme.

Dans des modes de réalisation, le code à barres 2D peut être un code QR (marque déposée, acronyme de « Quick Response » en anglais) comportant au moins un élément d'orientation de lecture du code et un espace de charge utile, au moins un élément d'orientation de lecture du code étant une zone de stockage et l'espace de charge utile étant une autre zone de stockage. Un élément d'orientation de lecture du code est un carré noir, contenant un autre carré noir sur fond blanc en son centre. Bien entendu, les couleurs de l'élément d'orientation peuvent être adaptées en fonction des couleurs mises en oeuvre pour représenter le code à barres 2D. L'espace de charge utile est directement lié aux dimensions du code à barres 2D et des cellules composant le code.

Dans des modes de réalisation, le code à barres 2D peut être un code DataMatrix (marque déposée) comportant au moins un élément d'orientation de lecture du code et un espace de charge utile, au moins un élément d'orientation étant une zone de stockage et l'espace de charge utile étant une autre zone de stockage. L'élément d'orientation comportant deux bordures de couleur unie, par exemple noires, adjacentes. Pour un DataMatrix rectangulaire ou carré, les bordures forment un coin.

Dans des modes de réalisation préférentiels, au moins une partie du code à barres 2D présente un code à barres 2D à haute densité. Par exemple, le code à barres 2D peut être un code QR dont le centre est remplacé par un DataMatrix. L'espace de charge utile sera donc diminué mais une nouvelle zone de stockage, le DataMatrix, à capacité de stockage plus grande que l'espace de charge utile supprimé est créée. Dans un autre exemple préférentiel, le code à barres 2D peut être un code QR dont un élément d'orientation de lecture du code est remplacé par un DataMatrix. L'espace de stockage dans l'élément d'orientation est donc fortement augmenté.

Dans des modes de réalisation préférentiels, le procédé 1010 comporte :
- une étape de détermination 1104 d'une taille de cellule du code à barres 2D, la taille de cellule étant définie par une surface contenant une quantité de points,
- une étape d'estimation 1105 d'une quantité minimum de points d'une couleur prédéterminée dans une cellule pour que la cellule soit détectée comme étant de ladite couleur par un lecteur prédéterminé et
- pour au moins une cellule, une étape de définition 1106 d'une image à représenter dans ladite cellule, la quantité de points de l'image de la couleur définissant la cellule étant supérieure à la quantité minimum estimée, un ensemble d'images représentant l'en-tête, le message et/ou la signature.

Ces modes de réalisation permettent d'utiliser le contenu des cellules comme zone de stockage.

Les dimensions minimales et maximales d'un code à barres 2D dépendent de :
- la surface allouée sur l'objet pour placer le code à barres 2D, définissant une dimension maximale du code à barres 2D et
- la quantité d'informations à encoder dans le code à barres 2D influençant une dimension minimale du code à barres 2D.

La surface allouée sur l'objet est choisie par l'opérateur apposant le code à barres 2D sur l'objet. Cet opérateur est le fabricant de l'objet ou son distributeur, par exemple.

Le nombre de couleurs dans le code à barres 2D peut influencer la quantité d'informations qu'il est possible d'encoder dans un code à barres 2D.

Les codes à barres 2D, pour pouvoir être lus par un lecteur prédéterminé, doivent présenter des cellules dont les dimensions minimales sont spécifiées dans les différentes normes et standards définissant ces codes.

Ainsi, en fonction de la surface allouée sur l'objet et la quantité d'informations à encoder, des dimensions minimales de cellules et donc les dimensions minimales et maximales d'un code à barres 2D peuvent être déterminées.

Autrement dit, la dimension maximale des cellules peut être déterminée en fonction des dimensions du code à barres 2D (qui dépendent de la surface allouée) et de la quantité d'informations à encoder.

Par ailleurs, en fonction de la résolution de marquage, des dimensions exprimées en centimètres ou en millimètres, par exemple, sont exprimées en nombre de points, par exemple en points par pouce (d'acronyme « DPI » ou « PPP »).

Lors de l'étape de détermination 104, la taille des cellules est calculée en fonction d'au moins la résolution de marquage, la surface allouée sur l'objet et la quantité d'informations à encoder.

Une fois la quantité de cellules déterminées, la quantité minimum de points d'une couleur prédéterminée dans une cellule pour que la cellule soit détectée comme étant de ladite couleur par un lecteur prédéterminé est estimée 105.

La couleur prédéterminée correspond à l'une des couleurs utilisées dans un code à barres 2D. Généralement, les codes à barres 2D présentent deux couleurs, préférentiellement, du noir et du blanc. Dans des modes de réalisation, les codes à barres 2D présentent trois couleurs ou plus.

Pour la suite de la description, le cas général de deux couleurs, le noir et le blanc, est choisie pour illustrer l'invention. La description qui suit peut, bien entendu, être adaptée au cas d'au moins trois couleurs ou de couleurs différentes.

A minima, pour qu'une couleur soit détectée correctement par le lecteur, la cellule doit comporter strictement plus de 50% de points de ladite couleur. Par exemple, pour une taille de cellule de 10 points par 10 points, au moins 51 points doivent être noirs pour que la cellule soit détectée comme étant noire.

Or, il est connu de l'homme du métier que l'étape marquage et l'étape de lecture provoquent des erreurs aléatoires dont le taux est déterminable et prévisible.

Lors de l'étape d'estimation 105, le taux d'erreur au marquage et à la lecture, par le lecteur prédéterminé, est calculé, mesuré, ou estimé. Et la quantité minimum de points d'une couleur prédéterminée est estimée pour prévoir ledit taux d'erreur obtenu.

Puis, pour au moins une cellule, le procédé 1010 comporte une étape de définition 106 d'une image à représenter dans ladite cellule, la quantité de points de l'image de la couleur définissant la cellule étant supérieure à la quantité minimum estimée. Lors de l'étape de définition 106, l'image peut être sélectionnée parmi une base de données d'images respectant la contrainte concernant la quantité de points de l'image de la couleur définissant la cellule et le nombre de couleurs maximum du code à barres 2D.

Préférentiellement, l'image représente un caractère alphanumérique. Par exemple, les points de la couleur dont la quantité est supérieure à la quantité minimum estimée représentent un caractère alphanumérique. Par exemple, dans une case qui doit être lue comme étant noire, les points noirs représentent le caractère alphanumérique.

Dans d'autres modes de réalisation, les points autres que les points de la couleur dont la quantité est supérieure à la quantité minimum estimée représentent un caractère alphanumérique. Par exemple, dans une case qui doit être lue comme étant blanche, les points noirs représentent le caractère alphanumérique.

Dans des modes de réalisation, une partie uniquement de l'ensemble des caractères alphanumériques peut être représenté dans une image. C'est-à-dire que certains caractères sont considérés comme trop proches d'un autre caractère pour être représentés. Des exemples de tels caractères sont « O » et « Q » ou encore « P » et « R ». Un seul des deux caractères pourra être représenté sur un même code à barres 2D. Cette information peut être renseignée dans une ressource distante.

Dans des modes de réalisation, les caractères alphanumériques représentés peuvent être en majuscules ou en minuscules.

Préférentiellement, les caractères font référence à un élément du message, par exemple la signature.

Lors de l'étape de détermination 1102, des zones de stockages chacune présentant une capacité de stockage sont déterminées. Selon les modes de réalisation exprimés ci-dessus, les zones de stockage peuvent être, par exemple :
- un espace de charge utile d'un code à barres 2D,
- un élément d'orientation d'un code à barres 2D,
- un DataMatrix incorporé dans un code à barres 2D où
- le contenu de cellule d'un code à barres 2D.

Le procédé 1010 comporte une étape de segmentation 1103 en au moins deux parties du contenu du cachet électronique visible en fonction de la capacité de stockage de chaque zone, chaque partie étant attribuée à une zone.

La segmentation 1103 dépend de la capacité de stockage de chaque zone. Préférentiellement, chaque élément parmi l'en-tête, le message, la signature ou un champ d'information secondaires est maintenu dans une partie. Dans des modes de réalisation, lors de l'étape de segmentation 103, la zone attribuée à chaque partie du contenu du CEV comporte une capacité suffisante pour stocker des redondances de la partie stockée.

La segmentation 1103 du contenu de CEV et l'attribution de chaque partie à une zone sont enregistrées lors de l'étape d'enregistrement 1107 d'une information représentative de la segmentation et de l'attribution pour recomposer, à la lecture, le cachet électronique visible.

Préférentiellement l'en-tête du cachet électronique visible comporte l'information représentative de la segmentation et de l'attribution. Par exemple, la segmentation et l'attribution 103 sont enregistrées sur une ressource locale ou distante à laquelle fait référence l'en-tête, par exemple un site internet de l'autorité de certification ou du fabricant. Ou encore, l'information représentative peut être un manifeste dont la localisation est obtenue à partir des informations contenues dans l'en-tête.

Dans d'autres modes de réalisation, le procédé 1010 comporte :
- une étape de création 1110 d'une marque anticopie fragile représentative de la segmentation et de l'attribution pour recomposer le cachet électronique et
- une étape de marquage 1111 de la marque anticopie fragile sur l'objet.

Par exemple, l'information représentative de la segmentation et de l'attribution est encodée dans une marque anticopie fragile. Dans ces modes de réalisation, le code généré comporte des redondances configurées pour que l'information soit lisible et/ou qu'il soit possible de la reconstituer, malgré les dégradations de la marque anticopie fragile dues à l'impression. Ainsi, la marque anticopie est bien fragile mais l'information peut être considérée comme robuste, c'est-à-dire qu'il est possible d'accéder à son contenu même si la marque est copiée.

Dans des modes de réalisation, un élément représentatif de la signature réalisée et des redondances sont encodés dans la marque anticopie fragile. Ces modes de réalisation permettent de vérifier l'authenticité de la signature au moment du marquage même si le certificat de signature n'est plus accessible.

Dans des modes de réalisation, un message encodé dans la marque anticopie fragile comporte au moins une information représentative de l'objet sur lequel la marque est à apposer. L'information représentative de l'objet peut être toute information relative à la fabrication et/ou à la distribution du produit. Par exemple, une identification du fabricant ou un numéro de série, ou encore une identification des distributeurs autorisés, une propriété physique extraite d'une photographie de l'objet ou une métrique d'artefact.

Une métrique d'artefact est une empreinte unique correspondant à l'objet. Les métriques d'artefacts sont calculées à partir de marques de formations individuelles à chaque objet lors de la fabrication de l'objet. Il s'agit, en quelque sorte, d'empreintes digitales de l'objet. Les métriques d'artefacts peuvent être calculées à partir d'une image de l'objet, par exemple.

L'étape de marquage 1111 de la marque anticopie fragile est réalisée par tout moyen connu de l'homme du métier, par exemple, une imprimante ou un laser pour gravure de l'objet.

L'étape d'encodage 1108 peut être réalisée par des moyens connus de l'homme du métier par exemple au moyen d'une clé symétrique ou d'une clé asymétrique, de brouillage et de permutations, de manière connue de l'homme du métier.

Le code à barres 2D est ensuite marqué 1109 sur l'objet. L'étape de marquage 1109 est réalisée par tout moyen connu de l'homme du métier, par exemple, une imprimante ou un laser pour gravure de l'objet. Préférentiellement, l'étape de marquage 1111 de la marque anticopie fragile sur l'objet est réalisée simultanément à l'étape de marquage 1109 du code à barres 2D et avec les mêmes moyens.

La figure 7 représente un premier mode de réalisation particulier d'un dispositif de sécurisation 1020 objet d'un aspect de l'invention. Le premier message est un contenu d'un cachet électronique visible représentatif d'au moins un en-tête, un message et une signature.

Le dispositif de sécurisation 1020 d'un objet comporte :
- un moyen de formation 1201 d'un contenu d'un cachet électronique visible représentatif d'au moins un en-tête, un message et une signature,
- un moyen de détermination 1202 d'une forme du premier code à barres 2D présentant une capacité de stockage d'informations répartie en au moins deux zones,
- un moyen de segmentation 1203 en au moins deux parties du contenu du cachet électronique visible en fonction de la capacité de stockage de chaque zone, chaque partie étant attribuée à une zone,
- un moyen d'enregistrement 1204 d'une information représentative de la segmentation et de l'attribution pour recomposer, à la lecture, le contenu du cachet électronique visible,
- un moyen d'encodage 1205 du cachet électronique visible segmenté dans la forme du code à barres 2D déterminée et
- un moyen de marquage 1206 de l'objet avec le premier code à barres 2D encodé.

Préférentiellement, les modes de réalisation du dispositif 1020 sont configurés pour mettre en oeuvre les étapes du procédé 1010 et leurs modes de réalisation tels qu'exposés ci-dessus et le procédé 1010 ainsi que ses différents modes de réalisation peuvent être mis en oeuvre par les modes de réalisation du dispositif 20.

Les moyens de formation 1201, de détermination 1202, de segmentation 1203, d'enregistrement 1204 et d'encodage 1205 sont préférentiellement un microcontrôleur mettant en oeuvre un programme informatique.

Le moyen de marquage 1206 peut être tout moyen connu de l'homme du métier, tels une imprimante ou un laser pour gravure de l'objet.

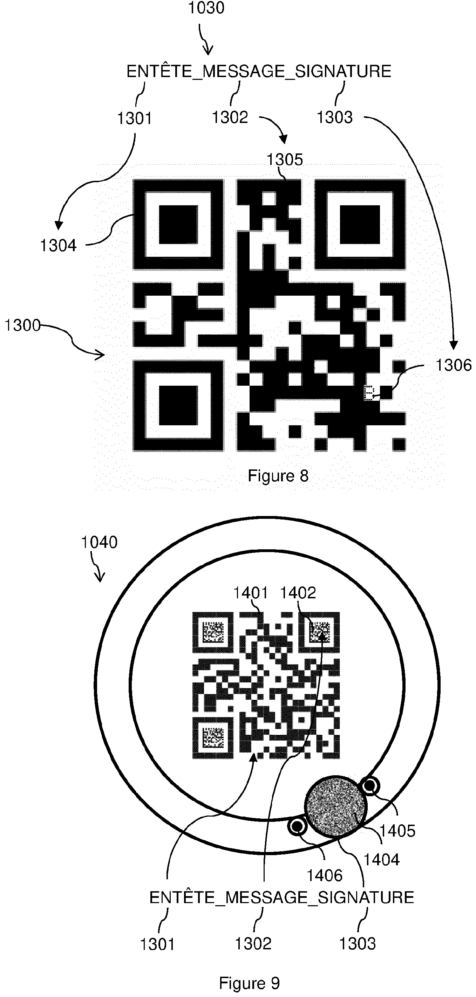

On observe, sur la figure 8, un mode de réalisation particulier d'un code à barres 2D obtenu par un procédé 1010 objet d'un aspect de l'invention.

La figure 8 représente un contenu d'un CEV, comportant un en-tête 1301, un message 1302 et une signature 1303.

Une forme de code à barres 2D 1300 comporte, trois zones de stockage : un élément d'orientation 1304, un espace de charge utile 1305 et le contenu de cellules 1306. Le contenu de cellule 1306 est représenté par une lettre « B » en majuscules, en noir sur fond blanc, remplaçant une cellule blanche. La forme de code à barres 2D 1300 est un code QR.

Sur la figure 8, le contenu de l'en-tête est encodé dans l'élément d'orientation 1304, le message 1302 est encodé dans l'espace de charge utile 1305 et la signature, qui n'a pas besoin d'être secrète, est encodée dans le contenu de cellules 1306.

On observe, sur la figure 9, un mode de réalisation particulier d'un code à barres 2D obtenu par un procédé 1010 objet d'un aspect de l'invention.

La figure 9 représente un contenu d'un CEV, comportant un en-tête 1301, un message 1302 et une signature 1303.

Une forme de code à barres 2D 1040 comporte, deux zones de stockage : un élément d'orientation 1402, remplacé par un DataMatrix et un espace de charge utile 1401. Dans des modes de réalisation, le contenu de cellule 403 est une troisième zone de stockage. Par exemple, une lettre « B » en majuscules est représentée, en noir sur fond blanc, remplaçant une cellule blanche. La forme de code à barres 2D est un code QR.

Sur la figure 9, le message 1302 est encodé dans le DataMatrix dans l'élément d'orientation 1402, l'en-tête 1301 est encodé dans l'espace de charge utile 1401 et la signature, qui n'a pas besoin d'être secrète, est encodée dans le contenu de cellules 1403.

On observe également sur la figure 9, une marque anticopie fragile 1404, 1405 et 1406 qui encode un élément représentatif de la signature. La marque anticopie fragile 1404 est un SealVector (marque déposée) par exemple. Dans des modes de réalisation, la marque anticopie fragile 1404, 1405 et 1406 encode un élément représentatif de l'objet et/ou l'information de segmentation et d'attribution.

Le SealVector (marque déposée), 1404, 1405 et 1406, comporte deux éléments d'orientation 1405 et 1406. Les éléments d'orientation sont des ronds noirs entourés de blanc sur un fond noir. Le SealVector comporte un espace de charge utile 1404 de forme circulaire. Pour déterminer la position du SealVector et le décoder, on calcule le centre des éléments d'orientation 1405 et 1406 la position du SealVector étant définie par rapport à la position desdits centres. Une fois la position et l'orientation du SealVector, il est possible de le décoder.

On rappelle ici qu'un SealVector est une marque anticopie fragile particulière.

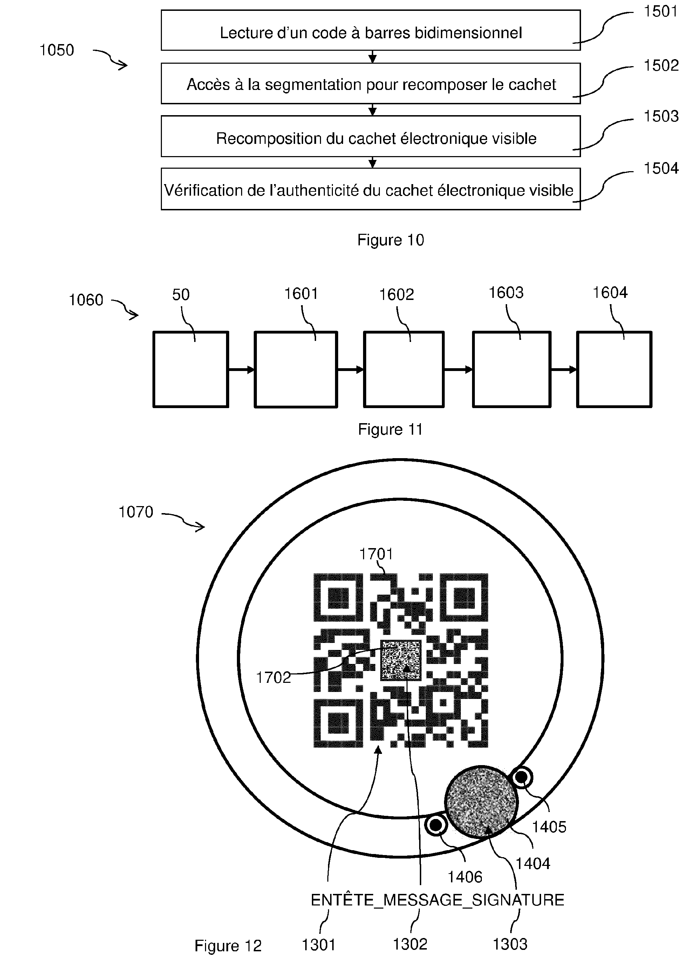

Sur la figure 12, le DataMatrix est localisé au centre du code 2D, et non dans un plot, en remplaçant une partie de l'espace de charge utile.

On observe, sur la figure 10, une vue schématique d'un mode de réalisation du procédé 1050 d'authentification objet d'un aspect de l'invention.

Le procédé d'authentification 1050 d'un objet comporte :
- une étape de lecture 1501 d'un code à barres 2D correspondant à l'étape de lecture 401,
- une étape d'accès 1502 à une information représentative de la segmentation et de l'attribution pour recomposer un contenu d'un cachet électronique visible,
- une étape de recomposition 1503 du contenu du cachet électronique visible en fonction de l'information accédée et
- une étape de vérification 1504 de l'authenticité du contenu du cachet électronique visible recomposé.

Lors de l'étape de lecture 1501, le code à barres 2D est décodé par un lecteur 1501. Le lecteur 1501 est, par exemple, un terminal portable communicant muni d'un appareil photo ou d'une caméra qui scanne le code. Le terminal portable communiquant applique ensuite un algorithme de décodage du code. Le lecteur accède 1502 à une information représentative de la segmentation et de l'attribution pour recomposer le contenu du CEV. Par exemple, le lecteur accède 1502 à une ressource distante, tel un serveur sécurisé indiquant quel segment se trouve dans quelle zone.

Dans des modes de réalisation, des caractères alphanumériques sont représentés dans des cellules du code à barres 2D sans modifier la couleur détectée par un lecteur du code à barres 2D. C'est-à-dire qu'une quantité minimum de points d'une couleur prédéterminée dans une cellule pour que la cellule soit détectée comme étant de ladite couleur par un lecteur prédéterminé est respectée lors de la représentation du caractère alphanumérique.

Préférentiellement, les caractères alphanumériques représentent la signature et peuvent être lus par reconnaissance optique de caractères.

L'étape de lecture 1501, une marque anticopie fragile peut être réalisée lue avec le même lecteur que le lecteur effectuant la lecture du code à barres 2D. Lors de l'étape de lecture 1501, le caractère original ou copié de la marque anticopie fragile est évalué. L'évaluation du caractère original ou copié dépend d'un taux d'erreur détecté lors de la lecture de la marque anticopie fragile. Le taux d'erreur est comparé à une valeur limite prédéterminée qui permet de déterminer si la marque anticopie fragile est un original ou non.

En effet, la marque anticopie fragile imprimée présente, dès sa première impression sur le document, une quantité importante d'erreurs aléatoires qui imposent qu'une copie, faite avec les mêmes moyens d'impression que le document original, de l'image d'identification imprimée comporte encore plus d'erreurs, le nombre d'erreurs total de la copie permettant de détecter qu'il s'agit d'une copie. Les redondances permettent de corriger les défauts d'impression et/ou de lecture et les marques d'usure ou d'effacement de la marque anticopie fragile.

Le caractère copié de la marque anticopie fragile est un premier niveau de vérification de l'authenticité de l'objet. Lors de l'étape de vérification de l'authenticité de l'objet 504, le caractère copié de la marque anticopie fragile est préférentiellement signalé à un utilisateur.

Lors de la recomposition 1503, les contenus de chaque zone sont juxtaposés dans l'ordre défini par les informations accédées. Le contenu du CEV est donc recomposé et son authenticité peut être vérifiée 1504 de manière connue de l'homme du métier.

Préférentiellement, lors de l'étape de vérification 1504, le contenu d'une marque anticopie fragile lu représente un élément représentatif de la signature. Lors de l'étape de vérification, une comparaison de l'élément représentatif lu dans la marque anticopie fragile et de la signature lue dans le code à barres 2D est effectuée pour déterminer l'authenticité de la signature au moment du marquage.

Dans des modes de réalisation, au cours de l'étape de lecture d'une marque anticopie fragile, une information représentative de l'objet sur lequel la marque a été apposée est obtenue, le procédé comportant de plus, une étape de comparaison de l'information représentative obtenue et de l'objet.

L'information représentative peut être un numéro de série par exemple. Le numéro de série de l'objet peut être obtenu par reconnaissance optique de caractères. Dans ces cas, l'étape de comparaison peut être effectuée par comparaison caractère par caractère. En fonction du résultat de la comparaison, une information d'authenticité du code à barres 2D et/ou de la marque anticopie fragile peut être indiquée à l'utilisateur lors de l'étape de vérification 1504.

On observe, sur la figure 11, un mode de réalisation particulier d'un dispositif 60 d'authentification d'un objet, objet d'un aspect de l'invention qui comporte :
- un moyen de lecture 1601 d'un code à barres 2D correspondant au moyen de lecture 501
- un moyen d'accès 1602 à une information représentative de la segmentation et de l'attribution pour recomposer un contenu d'un cachet électronique visible,
- un moyen de recomposition 1603 du contenu du cachet électronique visible en fonction de l'information accédée et
- un moyen de vérification1 604 de l'authenticité du contenu du cachet électronique visible recomposé.

Les moyens d'accès 1602, de recomposition 1603 et de vérification 1604 sont préférentiellement un microcontrôleur mettant en oeuvre un programme informatique.

Le moyen de lecture 1601 peut être tout moyen connu de l'homme du métier, tel terminal portable communicant muni d'un appareil photo ou d'une caméra qui scanne le code. Le terminal portable communiquant applique ensuite un algorithme de décodage du code.

Préférentiellement, les modes de réalisation du dispositif 1060 sont configurés pour mettre en oeuvre les étapes du procédé 1050 et leurs modes de réalisation tels qu'exposés ci-dessus et le procédé 1050 ainsi que ses différents modes de réalisation peuvent être mis en oeuvre par les modes de réalisation du dispositif 1060.

## Revendications

1. Procédé (100) de sécurisation d'un objet, comportant :
- une étape d'encodage (101) d'un premier message (301) dans un code à barres en deux dimensions (303),
- une étape de génération (105) d'une marque anticopie (304) et
- une étape de marquage (106) de l'objet avec le premier code à barres en deux dimensions et la marque anticopie,
**caractérisé en ce que** :
- le premier message comporte au moins un en-tête identifiant une ressource de certification et une signature réalisée au moyen de ladite ressource et
- la marque anti-copie est fragile et encode un deuxième message (302) représentatif de la signature réalisée, le deuxième message comportant des redondances.

2. Procédé (100) selon la revendication 1, dans lequel le deuxième message (302) encodé dans la marque anticopie fragile (304) comporte, de plus, au moins une information représentative de l'objet sur lequel la marque est à apposer.

3. Procédé (100) selon la revendication 2, qui comporte, de plus, une étape de détermination (102) d'au moins une propriété physique de l'objet sur lequel la marque anticopie fragile est à apposer, le deuxième message (302) encodé dans la marque anticopie fragile comportant une information représentative de ladite propriété physique déterminée.

4. Procédé (100) selon la revendication 2 ou 3, dans lequel une information représentative de l'objet sur lequel la marque est à apposer est une métrique d'artefact ou une fonction physique inclonable ; « physical unclonable function » en anglais, d'acronyme « PUF ».

5. Procédé (100) selon l'une des revendications 1 à 4, dans lequel le deuxième message (302) représentatif de la signature réalisée est obtenu au moins par application d'une fonction de hachage (103) de la signature réalisée.

6. Procédé (100) selon la revendication 5, dans lequel le deuxième message (302) représentatif de la signature réalisée est obtenu par calcul (104) d'un code de redondance cyclique, d'acronyme « CRC », appliqué au condensat issu de la fonction de hachage (103) de la signature réalisée.

7. Procédé (100) selon l'une des revendications 1 à 6, dans lequel le premier message (301) comporte un cachet électronique visible.

8. Procédé (1010) selon la revendication 7, qui comporte :
- une étape de détermination (1102) d'une forme du code à barres en deux dimensions présentant une capacité de stockage d'informations répartie en au moins deux zones,
- une étape de segmentation (1103) en au moins deux parties d'un contenu du cachet électronique visible en fonction de la capacité de stockage de chaque zone, chaque partie étant attribuée à une zone,
- une étape d'enregistrement (1107) d'une information représentative de la segmentation et de l'attribution pour recomposer, à la lecture, le contenu du cachet électronique visible et
- une étape d'encodage (1108) du cachet électronique visible segmenté dans la forme du premier code à barres en deux dimensions déterminée.

9. Procédé (1010) selon la revendication 8, dans lequel le code à barres en deux dimensions est un code comportant au moins un élément d'orientation de lecture du code et un espace de charge utile, au moins un élément d'orientation de lecture du code étant une zone de stockage et l'espace de charge utile étant une autre zone de stockage.

10. Procédé (1010) selon l'une des revendications 8 ou 9, qui comporte :
- une étape de création (1110) d'une marque anticopie fragile représentative de la segmentation et de l'attribution pour recomposer le cachet électronique et
- une étape de marquage (1111) de la marque anticopie fragile sur l'objet.

11. Procédé (1010) selon l'une des revendications 8 à 10, qui comporte, de plus :
- une étape de détermination (1104) d'une taille de cellule du code à barres en deux dimensions, la taille de cellule étant définie par une surface contenant une quantité de points,
- une étape d'estimation (1105) d'une quantité minimum de points d'une couleur prédéterminée dans une cellule pour que la cellule soit détectée comme étant de ladite couleur par un lecteur prédéterminé et
- pour au moins une cellule, une étape de définition (1106) d'une image à représenter dans ladite cellule, la quantité de points de l'image de la couleur définissant la cellule étant supérieure à la quantité minimum estimée, un ensemble d'images représentant l'en-tête, le message et/ou la signature.

12. Dispositif (20) de sécurisation d'un objet, le dispositif comportant :
- un moyen d'encodage (201) d'un premier message (301) dans un code à barres en deux dimensions (303),
- un moyen de génération (203) d'une marque anticopie (304), et
- un moyen de marquage (204) de l'objet avec le premier code à barres en deux dimensions et la marque anticopie ;
**caractérisé en ce que** :
- le moyen d'encodage est configuré pour que le premier message comporte au moins un en-tête identifiant une ressource de certification et une signature réalisée au moyen de ladite ressource et
- le moyen de génération de la marque anticopie est configuré pour que la marque anti-copie soit fragile et encode un deuxième message (302) représentatif de la signature réalisée, le deuxième message comportant des redondances.

13. Procédé (40) d'authentification d'un objet, comportant :
- une étape de lecture (401) d'un code à barres en deux dimensions (303) pour obtenir un premier message,
- une étape de calcul (402) d'un élément représentatif du condensat issu d'une fonction de hachage de la signature réalisée et/ou de la signature réalisée,
- une étape de lecture (403) d'une marque anticopie (304),
- une première étape de comparaison (404) de l'élément représentatif lue avec l'élément représentatif calculé et
- une étape d'indication (406) de l'authenticité de l'objet en fonction du résultat d'au moins une comparaison ;
**caractérisé en ce que** :
- au cours de l'étape de lecture du code à barres, le premier message comporte au moins un en-tête identifiant une ressource de certification et une signature réalisée au moyen de ladite ressource et
- la marque anti-copie est fragile et au cours de l'étape de lecture de la marque anticopie, on obtient un deuxième message (302) représentatif de la signature réalisée, le deuxième message comportant des redondances.

14. Dispositif (50) d'authentification d'un objet, le dispositif comportant :
- un moyen de lecture (501) d'un code à barres en deux dimensions (303) pour obtenir un premier message,
- un moyen de calcul (502) d'un élément représentatif du condensat issu d'une fonction de hachage de la signature réalisée et/ou de la signature réalisée,
- un moyen de lecture (503) d'une marque anticopie (304),
- un premier moyen de comparaison (504) de l'élément représentatif lue avec l'élément représentatif calculé et
- un moyen d'indication (505) de l'authenticité de l'objet en fonction du résultat d'au moins une comparaison ;
**caractérisé en ce que** :
- le moyen de lecture du code à barres est configuré pour lire, dans le premier message, au moins un en-tête identifiant une ressource de certification et une signature réalisée au moyen de ladite ressource et
- le moyen de lecture de la marque anticopie est configuré pour lire une marque anti-copie fragile et obtenir un deuxième message (302) représentatif de la signature réalisée, le deuxième message comportant des redondances.

15. Document (1080) sécurisé par un procédé selon l'une des revendications 1 à 11.

## Patentansprüche

1. Verfahren (100) zur Sicherung eines Objekts, aufweisend:
- einen Schritt des Kodierens (101) einer ersten Nachricht (301) in einen zweidimensionalen Barcode (303),
- einen Schritt des Erzeugens (105) einer Kopierschutzmarke (304) und
- einen Schritt des Kennzeichnens (106) des Objekts mit dem ersten zweidimensionalen Barcode und der Kopierschutzmarke,
**dadurch gekennzeichnet, dass**:
- die erste Nachricht mindestens einen Header aufweist, der eine Zertifizierungsressource identifiziert, und eine Signatur, die mithilfe dieser Ressource erstellt wurde, und
- die Kopierschutzmarke zerbrechlich ist und eine zweite Nachricht (302) kodiert, die für die erstellte Signatur repräsentativ ist, wobei die zweite Nachricht Redundanzen aufweist.

2. Verfahren (100) nach Anspruch 1, wobei die zweite Nachricht (302), die in der zerbrechlichen Kopierschutzmarke (304) kodiert ist, weiterhin wenigstens eine Information aufweist, die für das Objekt repräsentativ ist, auf dem die Marke anzubringen ist.

3. Verfahren (100) nach Anspruch 2, das weiterhin einen Schritt des Bestimmens (102) mindestens einer physikalischen Eigenschaft des Objekts, auf dem die zerbrechliche Kopierschutzmarke anzubringen ist, aufweist, wobei die zweite, in der zerbrechlichen Kopierschutzmarke kodierte Nachricht (302) eine Information aufweist, die für die bestimmte physikalische Eigenschaft repräsentativ ist.

4. Verfahren (100) nach Anspruch 2 oder 3, wobei eine Information, die für das Objekt repräsentativ ist, auf dem die Marke anzubringen ist, eine Artefaktmetrik oder eine einklonbare physikalische Funktion; "physical unclonable function" auf Englisch, Abkürzung "PUF", ist.

5. Verfahren (100) nach einem der Ansprüche 1 bis 4, wobei die zweite Nachricht (302), die für die erstellte Signatur repräsentativ ist, mindestens durch Anwendung einer Hash-Funktion (103) der erstellten Signatur erhalten wird.

6. Verfahren (100) nach Anspruch 5, wobei die zweite Nachricht (302), die für die erstellte Signatur repräsentativ ist, durch Berechnung (104) eines zyklischen Redundanzcodes, Akürzung "CRC", erhalten wird, der auf das Kondensat aus der Hash-Funktion (103) der erstellten Signatur angewendet wird.

7. Verfahren (100) nach einem der Ansprüche 1 bis 6, wobei die erste Nachricht (301) einen sichtbaren elektronischen Stempel aufweist.

8. Verfahren (1010) nach Anspruch 7, das aufweist:
- einen Schritt (1102) des Bestimmens einer Form des zweidimensionalen Barcodes, der eine in mindestens zwei Bereiche aufgeteilte Informationsspeicherkapazität aufweist,
- einen Schritt des Segmentierens (1103) in mindestens zwei Teile eines Inhalts des sichtbaren elektronischen Stempels in Abhängigkeit von der Speicherkapazität jedes Bereichs, wobei jeder Teil einem Bereich zugeordnet ist,
- einen Schritt des Speicherns (1107) einer Information, die für die Segmentierung und die Zuordnung repräsentativ ist, um beim Lesen den Inhalt des sichtbaren elektronischen Stempels neu zusammenzustellen, und
- einen Schritt des Kodierens (1108) des sichtbaren elektronischen Stempels, der in der bestimmten Form des ersten zweidimensionalen Barcodes segmentiert ist.

9. Verfahren (1010) nach Anspruch 8, wobei der zweidimensionale Barcode ein Code ist, der wenigstens ein Leseausrichtungselement des Codes und einen Nutzlastraum umfasst, wobei mindestens ein Leseausrichtungselement des Codes ein Speicherbereich und der Nutzlastraum ein anderer Speicherbereich ist.

10. Verfahren (1010) nach einem der Ansprüche 8 oder 9, das aufweist:
- einen Schritt des Erstellens (1110) einer zerbrechlichen Kopierschutzmarke, die für die Segmentierung und die Zuordnung repräsentativ ist, um den elektronischen Stempel neu zusammenzustellen, und
- einen Schritt des Markierens (1111) der zerbrechlichen Kopierschutzmarke auf dem Objekt.

11. Verfahren (1010) nach einem der Ansprüche 8 bis 10, das weiterhin umfasst:
- einen Schritt des Bestimmens (1104) einer Zellengröße des zweidimensionalen Barcodes, wobei die Zellengröße durch eine Fläche definiert ist, die eine Anzahl von Punkten enthält,
- einen Schritt des Schätzens (1105) einer Mindestmenge von Punkten einer vorbestimmten Farbe in einer Zelle, damit die Zelle von einem vorbestimmten Lesegerät als solche Farbe erkannt wird, und
- für mindestens eine Zelle, einen Schritt des Definierens (1106) eines Bildes, das in der Zelle darzustellen ist, wobei die Menge der Punkte des Bildes der Farbe, die die Zelle definiert, größer ist als die geschätzte Mindestmenge, wobei eine Reihe von Bildern den Header, die Nachricht und/oder die Signatur darstellt.

12. Vorrichtung (20) zur Sicherung eines Objekts, wobei die Vorrichtung aufweist:
- ein Mittel zum Kodieren (201) einer ersten Nachricht (301) in einem zweidimensionalen Barcode (303),
- ein Mittel zum Erzeugen (203) einer Kopierschutzmarke (304), und
- ein Mittel zum Kennzeichnen (204) des Objekts mit dem ersten zweidimensionalen Barcode und der Kopierschutzmarke,
**dadurch gekennzeichnet, dass**:
- das Kodierungsmittel derart ausgelegt ist, dass die erste Nachricht mindestens einen Header aufweist, der eine Zertifizierungsressource identifiziert, und eine Signatur, die mittels dieser Ressource erstellt wurde, und
- das Mittel zum Erzeugen der Kopierschutzmarke derart ausgelegt ist, dass die Kopierschutzmarke zerbrechlich ist und eine zweite Nachricht (302) kodiert, die für die erstellte Signatur repräsentativ ist, wobei die zweite Nachricht Redundanzen enthält.

13. Verfahren (40) zur Authentifizierung eines Objekts, aufweisend:
- einen Schritt des Lesens (401) eines zweidimensionalen Barcodes (303), um eine erste Nachricht zu erhalten,
- einen Schritt des Berechnens (402) eines repräsentativen Elements des Kondensats aus einer Hash-Funktion der erstellten Signatur und/oder der erstellten Signatur,
- einen Schritt des Lesens (403) einer Kopierschutzmarke (304),
- einen ersten Schritt des Vergleichens (404) des ausgelesenen repräsentativen Elements mit dem berechneten repräsentativen Element und
- einen Schritt des Angebens (406) der Authentizität des Objekts in Abhängigkeit vom Ergebnis mindestens eines Vergleichs;
**dadurch gekennzeichnet, dass**:
- während des Schritts des Lesens des Barcodes die erste Nachricht mindestens einen Header aufweist, der eine Zertifizierungsressource identifiziert und eine Signatur, die mittels dieser Ressource erstellt wurde, und
- die Kopierschutzmarke zerbrechlich ist und während des Leseschritts der Kopierschutzmarke eine zweite Nachricht (302) erhalten wird, die für die erstellte Signatur repräsentativ ist, wobei die zweite Nachricht Redundanzen enthält.

14. Vorrichtung (50) zur Authentifizierung eines Objekts, wobei die Vorrichtung aufweist:
- ein Lesemittel (501) eines zweidimensionalen Barcodes (303), um eine erste Nachricht zu erhalten,
- ein Berechnungsmittel (502) für ein repräsentatives Element des Kondensats aus einer Hash-Funktion der erstellten Signatur und/oder der erstellten Signatur,
- ein Lesemittel (503) einer Kopierschutzmarke (304),
- ein erstes Vergleichsmittel (504) des ausgelesenen repräsentativen Elements mit dem berechneten repräsentativen Element und
- ein Mittel zur Angabe (505) der Authentizität des Objekts in Abhängigkeit vom Ergebnis mindestens eines Vergleichs;
**dadurch gekennzeichnet, dass**:
- das Barcode-Lesemittel derart ausgelegt ist, dass es in der ersten Nachricht mindestens einen Header liest, der eine Zertifizierungsressource identifiziert, und eine Signatur, die mittels dieser Ressource erstellt wurde, und
- das Lesemittel der Kopierschutzmarke derart ausgelegt ist, dass es eine zerbrechliche Kopierschutzmarke liest und eine zweite Nachricht (302) erhält, die für die erstellte Signatur repräsentativ ist, wobei die zweite Nachricht Redundanzen aufweist.

15. Dokument (1080), das durch ein Verfahren nach einem der Ansprüche 1 bis 11 gesichert wird.

## Claims

1. Method (100) for securing an object, the method comprising:
- a step (101) of encoding a first message (301) in a two-dimensional barcode (303);
- a step (105) of generating an anti-copy mark (304); and
- a step (106) of marking the object with the first 2D barcode and the anti-copy mark,
**characterised in that**:
- the first message comprises at least a header identifying a certification resource and a signature produced by means of this resource; and
- the anti-copy mark is fragile and encodes a second message (302) representative of the signature produced, the second message comprising redundancies.

2. Method (100) according to claim 1, wherein the second message (302) encoded in the fragile anti-copy mark (304) also comprises at least one item of information representative of the object on which the mark is to be affixed.

3. Method (100) according to claim 2, which further comprises a step (102) of determining at least one physical property of the object on which the fragile anti-copy mark is to be affixed, the second message (302) encoded in the fragile anti-copy mark comprising an item of information representative of said physical property determined.

4. Method (100) according to claim 2 or 3, wherein an item of information representative of the object on which the mark is to be affixed is a metric artefact or a physical unclonable function, acronym "PUF".

5. Method (100) according to one of claims 1 to 4, wherein the second message (302) representative of the signature produced is obtained at least by applying a hash function (103) for the signature produced.

6. Method (100) according to claim 5, wherein the second message (302) representative of the signature produced is obtained by the calculation (104) of a cyclic redundancy code, acronym "CRC", applied to the hash resulting from the hash function (103) for the signature produced.

7. Method (100) according to one of claims 1 to 6, wherein the first message (301) comprises a visible electronic stamp.

8. Method (1010) according to claim 7, which comprises:
- a step (1102) of determining a shape of a 2D barcode having an information storage capacity spread over at least two areas;
- a step (1103) of segmenting the content of the visible electronic stamp into at least two portions according to the storage capacity of each area, each portion being assigned to an area;
- a step (1107) of recording an item of information representative of the segmentation and assignment in order to reconstruct, on reading, the content of the visible electronic stamp; and
- a step (1108) of encoding the segmented visible electronic stamp in the shape of the first 2D barcode determined.

9. Method (1010) according to claim 8, wherein the 2D barcode is a code comprising at least one orientation element for reading the code and a payload space, at least one orientation element for reading the code being a storage area and the payload space being another storage area.

10. Method (1010) according to one of claims 8 or 9, which comprises
- a step (1110) of creating a fragile anti-copy mark representative of the segmentation and assignment in order to reconstruct the electronic stamp; and
- a step (1111) of marking the fragile anti-copy mark on the object.

11. Method (1010) according to one of claims 8 to 10, which further comprises:
- a step (1104) of determining a cell size of the 2D barcode, the cell size being defined by a surface containing a quantity of dots;
- a step (1105) of estimating a minimum quantity of dots of a predefined colour in a cell such that the cell is detected as having this colour by a predefined reader; and
- for at least one cell, a step (1106) of defining an image to be represented in this cell, the quantity of dots of the image having the colour defining the cell being greater than the estimated minimum quantity, a set of images representing the header, message and/or signature.

12. Device (20) for securing an object, the device comprising:
- a means (201) for encoding a first message (301) in a 2D barcode (303);
- a means (203) for generating an anti-copy mark (304); and
- a means (204) for marking the object with the first 2D barcode and the anti-copy mark,
**characterised in that**:
- the encoding means is configured such that the first message comprises at least a header identifying a certification resource and a signature produced by means of this resource; and
- the means for generating the anti-copy mark is configured such that the anti-copy mark is fragile and encodes a second message (302) representative of the signature produced, the second message comprising redundancies.

13. Method (40) for authenticating an object, which method comprises:
- a step (401) of reading a 2D barcode (303) to obtain a first message;
- a step (402) of calculating an element representative of the hash resulting from a hash function for the signature produced and/or of the signature produced;
- a step (403) of reading an anti-copy mark (304);
- a first step (404) of comparing the representative element read with the representative element calculated; and
- a step (406) of indicating the authenticity of the object on the basis of the result of at least one comparison,
**characterised in that**:
- during the step of reading the barcode, the first message comprises at least a header identifying a certification resource and a signature produced by means of this resource; and
- the anti-copy mark is fragile and, during the step of reading the anti-copy mark, a second message (302) representative of the signature produced is obtained, the second message comprising redundancies.

14. Device (50) for authenticating an object, the device comprising:
- a means (501) for reading a 2D barcode (303) to obtain a first message;
- a means (502) for calculating an element representative of the hash resulting from a hash function for the signature produced and/or of the signature produced;
- a means (503) for reading an anti-copy mark (304);
- a first means (504) for comparing the representative element read with the representative element calculated; and
- a means (505) for indicating the authenticity of the object on the basis of the result of at least one comparison,
**characterised in that**:
- the means for reading the barcode is configured to read, in the first message, at least a header identifying a certification resource and a signature produced by means of this resource; and
- the means for reading the anti-copy mark is configured to read a fragile anti-copy mark and obtain a second message (302) representative of the signature produced, the second message comprising redundancies.

15. Document (1080) secured by a method according to one of claims 1 to 11.
